# EUROPEAN PATENT SPECIFICATION

(11) **EP 2 921 965 B1**
(45) Date of publication and mention of the grant of the patent: **11.01.2017**
(21) Application number: 14168830.9
(22) Date of filing: 19.05.2014
(51) Int. Cl.: G06F 11/07, G06F 11/16, G06F 12/08, G06F 12/14, G06F 11/20

(54) **Information processing device and shared memory management method**
Informationsverarbeitungsvorrichtung und geteiltes Speicherverwaltungsverfahren
Dispositif de traitement d'informations et procédé de gestion de mémoire partagée

(30) Priority: 19.03.2014 US 201414219507
(43) Date of publication of application: 23.09.2015
(73) Proprietor: FUJITSU LIMITED, Kawasaki-shi, Kanagawa 211-8588 (JP)
(72) Inventor: Kondou, Hiroshi, Kanagawa, 211-8588 (JP); Watanabe, Reiji, Sunnyvale, CA California 94085 (US)
(74) Representative: Hoffmann Eitle

(56) References cited:
- EP-A2- 2 610 755
- EP-A2- 2 634 696
- US-A1- 2013 346 369

## Description

### FIELD

The embodiment discussed herein is related to an information processing device and a shared memory management method.

### BACKGROUND

Recently, information processing systems each including multiple information processing devices that are connected via a crossbar switch have been used as servers etc. Each of the information processing devices includes a central processing unit (CPU), a memory, and a hard disk drive (HDD) and communicates with other information processing devices via a crossbar switch. Each of the information processing devices includes its own local memory that only that particular information processing device can access and a shared memory that other information processing devices can access.

A technology using access tokens has been developed for controlling permission for other information processing devices to access a shared memory (see Japanese Laid-open Patent Publication No. 2013-140446, corresponding to EP-A2-2 610 755). Each information processing device stores, in a register, a key referred to as a "memory token" for each unit area of a given size of a shared memory and permits only other information processing devices, which have specified keys as access tokens, to access the corresponding unit areas.

For a failure in a memory, there are operating systems (OSes) and hypervisors that support an automatic replacing function whereby, when a single bit error is detected according to an error correcting code (ECC), there is automatic replacing between a memory area where a failure has occurred and a normal memory area.

There is another conventional technology where, in a semiconductor disk device, the contents stored in a semiconductor memory module in which a memory error has occurred are copied to a backup module so that the contents stored in the semiconductor memory module are saved (see Japanese Laid-open Patent Publication No. 7-311661). There is also another conventional technology where one of two cache devices that has received data from a host stores the data in its own cache memory and transmits the data to another device so as to prevent a data loss when a failure occurs (see International Publication Pamphlet No. WO 2003/090089).

In an information processing system including multiple information processing devices that are connected via a crossbar switch, etc., multiple OSes run and this may lead to a problem in that, when a failure has occurred in a shared memory, written data is not written to the shared memory by the automatic replacing function.

Specifically, when, while one OS is copying the data of the failed memory area of the shared memory to a normal memory area, a different information processing device that is operated by a different OS writes data to the failed memory area, the written data is not necessarily written to the normal memory area.

Furthermore, even if the OS that is executing the automatic replacing function tries to prevent the data in the failed memory area from being updated, the OS is not able to stop any process executed by a different OS and thus is not able to prevent access due to the process executed by the different OS.

Document EP-A2 2 634 696 discloses an information processing apparatus having resumption control unit that performs control to resume access to recovered data from one node and other node. The apparatus has a detecting unit that detects a correctable error in data stored in a shared memory area of a storage device of one node or other node. A prevention control unit prevents one node and other node from accessing the memory area, when the error is detected. A recovering unit recovers the data stored in a memory area different from the memory area. information about the different memory area, to other node.

Accordingly, it is an object in one aspect of an embodiment of the invention to prevent, when a failure has occurred in a shared memory, occurrence of a problem in that written data is not written to a shared memory by the automatic replacing function, which allows the system to continue its operation.

### SUMMARY

According to an aspect of an embodiment, there is proposed an information processing system according to claim 1,a corresponding shared memory management method according to claim 7 and a corresponding computer readable storing medium according to claim 8.

Dependent claims relate to preferred embodiments of the present invention.

### BRIEF DESCRIPTION OF DRAWINGS

FIG. 1 is a diagram of the hardware configuration of an information processing system according to an embodiment;
FIG. 2 is a block diagram of a CPU chip;
FIG. 3 is a diagram of the logical hardware configuration and the software functional configuration of the information processing system according to the embodiment;
FIG. 4A is a diagram indicating exemplary management tables;
FIG. 4B is a diagram indicating management tables where the management information on a failed segment has been copied to management information on a replacement segment and the diagram thus indicates management tables different from their state in FIG. 4A;
FIG. 4C is a diagram indicating management tables where the use prohibition flag of the failed segment has been changed and the diagram thus indicates management tables different from the state in FIG. 4B;
FIG. 5 is a flowchart of a process for recognizing applications that use a shared memory per segment;
FIG. 6A is a flowchart of a process for recognizing a node that uses the shared memory per segment;
FIG. 6B is a flowchart of a process for recognizing an application that uses the shared memory per segment;
FIG. 7 is a flowchart of a process performed when an error has occurred in Segment A of the shared memory; and
FIG. 8 is a flowchart of a replacing process performed for a shared memory.

### DESCRIPTION OF EMBODIMENTS

Preferred embodiments of the present invention will be explained with reference to accompanying drawings. The embodiment does not limit the disclosed technology.

The technical terms used to describe the embodiment will be explained first.

"Node" denotes an information processing device (computer system) on which one or more OSes run. A computer system that has a virtualization function is able to logically divide a node into multiple logical domains and allows multiple OSes to run on the node.

"Shared memory accessed by nodes" denotes a shared memory that is accessible (readable/writable) by multiple nodes (multiple applications that run on different OSes).

"Home node" denotes a node that has a physical memory that is established as the memory area shared by nodes.

"Remote node" denotes a node that refers to or updates the memory of the home node.

"Segment" denotes a unit in which the shared memory is managed. A memory token, which will be described later, can be set for each segment.

"Segment size" denotes the size of the unit in which the shared memory is managed, e.g. 4 megabytes (4 MB), 32 megabytes (32 MB), 256 megabytes (256 MB), and 2 gigabytes (2 GB).

"VA" denotes a virtual address that is used by an OS or an application.

"RA" denotes a real address that is assigned to each logical domain in a system in which a virtualization function is installed.

"PA" denotes a physical address that is assigned according to the physical position.

"Memory token" denotes a memory access key that is set in a memory token register of a CPU chip of the home node. A different memory token is set for each segment.

"Access token" denotes a memory access key that is set when a remote node accesses the shared memory of the home node (different node).

On the basis of an access token that is added to a memory access request from a remote node and a memory token that is set in the memory token register of the home node, hardware controls whether the memory access request can be executed.

When the memory token of the home node and the access token of the remote node match, it is possible to access (read data from and write data in) the shared memory.

When the memory token of the home node and the access token of the remote node do not match and if an access to (writing data in/reading data from) the shared memory is attempted, an exception trap occurs and thus it is not possible to access the shared memory.

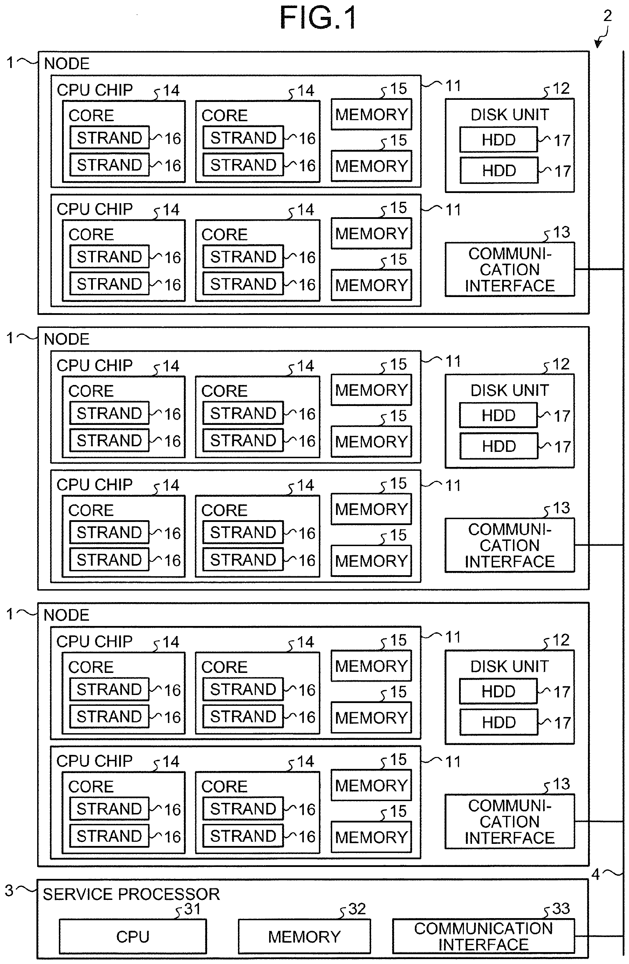

The hardware configuration of the information processing system according to the embodiment will be described here. FIG. 1 is a diagram of the hardware configuration of the information processing system according to the embodiment. FIG. 1 represents an information processing system 2 that includes three nodes 1 and a service processor 3. The three nodes 1 and the service processor 3 are connected to one another via a crossbar network 4.

The node 1 is an information processing device that includes two CPU chips 11, a disk unit 12, and a communication interface 13. The CPU chip 11 is a chip that includes two cores 14 and two memories 15. The core 14 is a processor that includes two strands 16. The strand 16 is a unit by which the core 14 executes an instruction. A program is executed by each of the strands 16. The memory 15 is a random access memory (RAM) that stores the program executed by the core 14 and data that is used by the core 14.

The disk unit 12 is a storage device that includes two HDDs 17. The HDD 17 is a magnetic disk device. The communication interface 13 is an interface for communicating with other nodes 2 and the service processor 3 via the crossbar network 4.

The service processor 3 is a device that controls the nodes 1 and that includes a CPU 31, a memory 32, and a communication interface 33. The CPU 31 is a central processing unit that executes a program that is stored in the memory 32. The memory 32 is a RAM that stores the program that is executed by the CPU 31 and data that is used by the CPU 31. The communication interface 33 is an interface for communicating with the nodes 1 via the crossbar network 4.

Three nodes 1 are depicted in FIG. 1 to provide simplified descriptions, but the information processing system may include any arbitrary number of nodes 1. FIG. 1 illustrates a case where the node 1 includes two CPU chips 11, but the node 1 may include any arbitrary number of CPU chips 11. FIG. 1 illustrates a case where the CPU chip 11 includes two cores 14, but the CPU chip 11 may include any arbitrary number of cores 14. FIG. 1 illustrates a case where the core 14 includes two strands 16, but the core 14 may include any arbitrary number of strands 16. FIG. 1 illustrates a case where the CPU chip 11 includes two memories 15, but the CPU chip 11 may include any arbitrary number of memories 15. FIG. 1 illustrates a case where the disk unit 12 includes two HDDs 17, but the disk unit 12 may include any arbitrary number of HDDs 17.

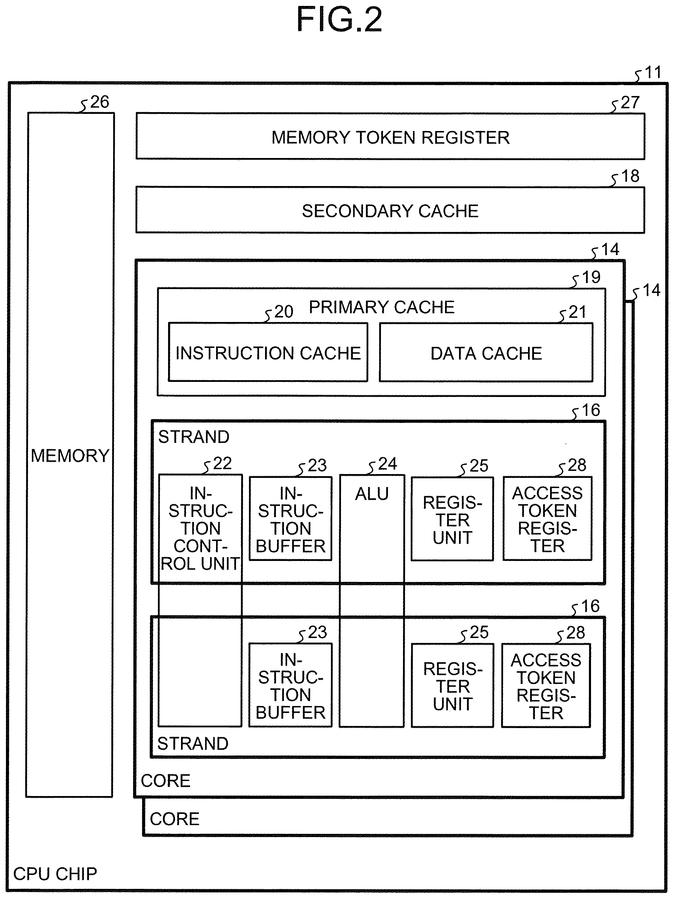

FIG. 2 is a block diagram of the CPU chip 11. As illustrated in FIG. 2, the CPU chip 11 includes two cores 14, a memory 26, a memory token register 27, and a secondary cache 18. The memory 26 corresponds to the two memories 15 in FIG. 1.

The memory token register 27 stores a memory token for each segment. The secondary cache 18 is a cache device that includes a low-speed cache memory with a larger capacity than that of a primary cache 19 of the core 14. The memory token register 27 and the secondary cache 18 are omitted from FIG. 1.

The core 14 includes the primary cache 19 and the two strands 16. The primary cache 19 is a cache device that includes a high-speed cache memory with a smaller capacity than that of the secondary cache 18. The primary cache 19 includes an instruction cache 20 and a data cache 21. The instruction cache 20 stores instructions and the data cache 21 stores data.

The strand 16 reads the instructions and the data from the primary cache 19. When an instruction or data to be read by the strand 16 is not in the primary cache 19, the primary cache 19 reads the instruction or data from the secondary cache 18. When an instruction or data to be read by the primary cache 19 is not in the secondary cache 18, the secondary cache 18 reads the instruction or the data from the memory 26.

The strand 16 writes, in the primary cache 19, data to be stored in the memory 26. The data that is written by the strand 16 in the primary cache 19 is then written in the secondary cache 18 and then the data from the secondary cache 18 is written in the memory 26.

The strand 16 includes an instruction control unit 22, an instruction buffer 23, an ALU (Arithmetic and Logical Unit) 24, a register unit 25, and an access token register 28. The instruction control unit 22 reads an instruction from the instruction buffer 23 and controls the execution of the read instruction. The instruction buffer 23 stores the instruction that is read from the instruction cache 20. The ALU 24 executes operations such as arithmetic operations. The register unit 25 stores data that is used to execute the instruction, the results of the execution of the instruction, etc. While the strand 16 includes its own instruction buffer 23 and register unit 25, the instruction control unit 22 and the ALU 24 are shared by the two strands 16.

The access token register 28 stores an access token for each segment of the shared memory of a different node 1. A process executed by the strand 16 accesses the shared memory by using the access tokens that are stored in the access token register 28. The primary cache 19 and the access token register 28 are omitted from FIG. 1. The access token registers 28 are included in STRANDs 16 in FIG.2, but the way of implementation of the access token registers 28 are not limited in the example as in FIG.2. Each of the access token registers 28 corresponding to each STRANDs 16 may be implemented outside of the STRANDs 16.

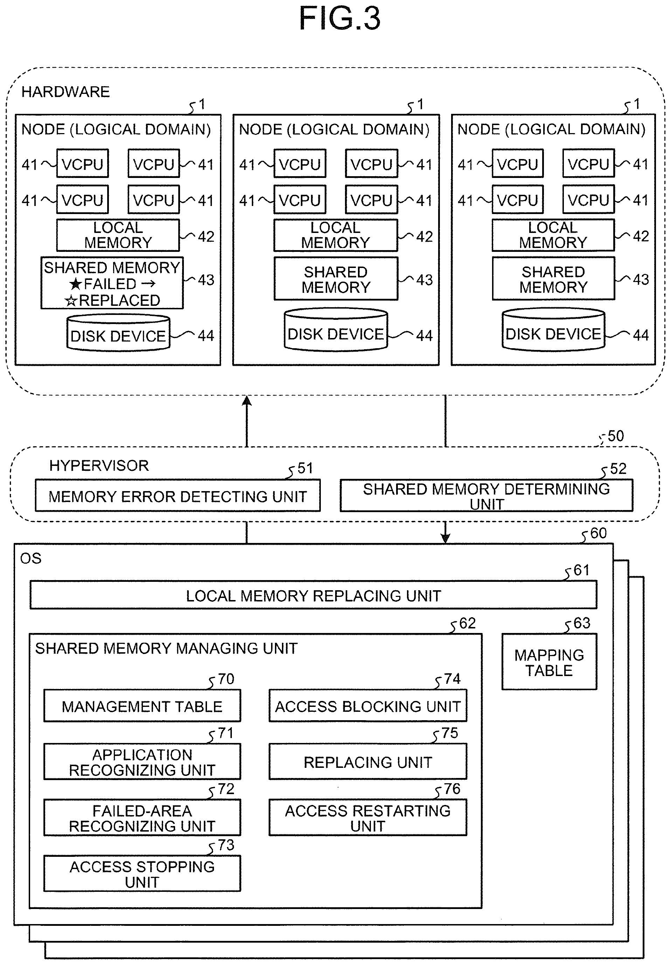

The logical hardware configuration and the software functional configuration of the information processing system according to the embodiment will be described here. The logical hardware configuration denotes logical hardware that OSes and applications use. FIG. 3 is a diagram of the logical hardware configuration and the software functional configuration of the information processing system 2 according to the embodiment. FIG. 3 illustrates a case where one node 1 is used as one logical domain. One OS runs in one logical domain. Accordingly, one OS runs on each node 1.

As illustrated in FIG. 3, the node 1 includes four VCPUs 41, a local memory 42, a shared memory 43, and a disk device 44 as logical resources. The VCPU 41 is a logical CPU that corresponds to any one of the eight strands 16 represented in FIG. 1.

The local memory 42 is a memory that is accessed by only its own node 1, and the shared memory 43 is a memory that is accessible by local and remote nodes 1. The local memory 42 and the shared memory 43 correspond to the four memories 15 represented in FIG. 1. Two memories 15 may correspond to the local memory 42 and the remaining two other memories may correspond to the shared memory 43. Alternatively, three memories 15 may correspond to the local memory 42 and the remaining one memory may correspond to the shared memory 43. When a segment of the shared memory 43 fails, the failed segment is replaced with a different normal segment. The disk device 44 corresponds to the disk unit 12 represented in FIG. 1.

A hypervisor 50 is basic software that manages the physical resources of the information processing system 2 and provides logical resources to an OS 60. The hypervisor 50 includes a memory error detecting unit 51 and a shared memory determining unit 52.

The memory error detecting unit 51 detects an error, such as an ECC error that occurs in the local memory 42 or the shared memory 43 and gives the shared memory determining unit 52 information on the memory area where the error has occurred (address, size, etc.).

Depending on the information on the memory area where the error has occurred (address, size, etc.), the shared memory determining unit 52 determines whether the error detected by the memory error detecting unit 51 is an error that has occurred in the shared memory 43 or an error that has occurred in the local memory 42. If the error occurs in the local memory 42, the shared memory determining unit 52 gives a local memory replacing unit 61 information on the segment that includes the memory area where the error has occurred (address, size, segment number, etc.). If an error occurs in the shared memory 43, the shared memory determining unit 52 gives a shared memory managing unit 62 of the home node information on the segment that includes the memory area where the error has occurred (address, size, segment number, etc.).

The OS 60 uses the logical resources to control execution of an application. The OS 60 includes the local memory replacing unit 61, the shared memory managing unit 62, and a mapping table 63. If an error occurs in the local memory 42, the local memory replacing unit 61 performs a local memory replacing process for replacing the area where the error has occurred with a normal area in the local memory 42 or performs a local memory separation process for separating the area where the error has occurred. The mapping table 63 is a table for converting a VA to a PA.

The shared memory managing unit 62 manages the shared memory 43 and includes a management table 79, an application recognizing unit 71, a failed-area recognizing unit 72, an access stopping unit 73, an access blocking unit 74, a replacing unit 75, and an access restarting unit 76.

A management table 70 is a table that stores information on all of the shared memories 43 of the information processing system 2, including the shared memories 43 of different nodes 1.

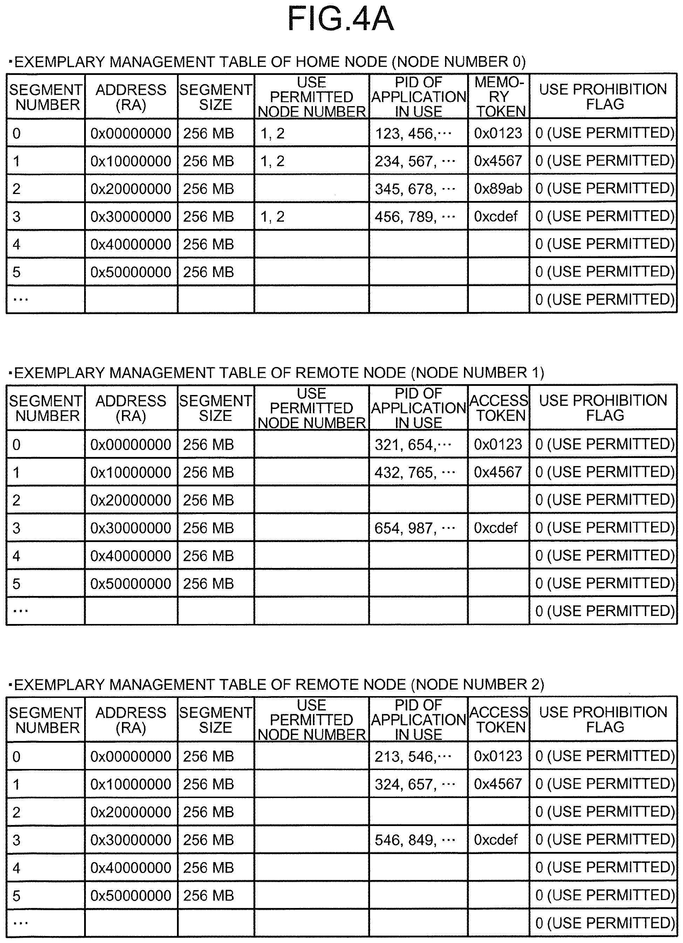

FIG. 4A is a diagram of an example of the management table 70. FIG. 4A represents a management table 70 of the home node with a node number "0" and management tables 70 of two different remote nodes with node numbers "1" and "2". In FIG. 4A, the segments with the segment numbers "0" to "5" are segments of the home node that has the physical memory.

As represented in FIG. 4A, the management table 70 for the home node stores, for each segment, a segment number, address, segment size, use permitted node number, PID of the application in use, memory token, and use prohibition flag. Each of the management tables for the remote nodes stores almost the same items as those of the management table 70 for the home node but they store access tokens instead of memory tokens.

The segment number is the identification number that identifies the segment. The address is the RA of the segment. The address may be the PA. The segment size is the size of the segment. The use permitted node number is used only in the management table 70 for the home node and is the node number of a node that is permitted to use the segment.

The PID of an application in use is a process ID of the application that uses the segment in its own node. The memory token is a memory access key that is used to control permission to access the segment. The access token is a memory access key that is used to access the shared memory of the home node. The use prohibition flag is a flag indicating whether it is possible (0) or not possible (1) to use the segment.

For example, according to the management table 70 for the home node, the segment with the identification number "0" has an RA "00000000" represented by hexadecimal and a size "256 MB" and the node numbers of the nodes that are permitted to use the segment are "1" and "2". The segment with the identification number "0" is used for the processes with the process IDs "123" and "456" in the home node, the memory access key is "0123" by hexadecimal, and the segment can be used.

According to the management table 70 for the remote node with a node number "1", the segment with the identification number "0" has an RA "00000000" represented by hexadecimal and a size "256 MB". Furthermore, no permitted node number is used here because the segment with the identification number "0" is not included in the shared memory 43 whose physical memory the node has. Furthermore, the segment with the identification number "0" is used for the processes with the process IDs "321" and "654" in its own node, the memory access key is "0123" by hexadecimal, and it is possible to use the segment. Furthermore, according to the management table 70 for the remote node with a node number "1", because it is not permitted to use the segment with the identification number "2", there is no process ID of the application in use.

The following description refers back to FIG. 3. For each segment, the application recognizing unit 71 recognizes which node 1 is using which segment and which process is using the segment. Specifically, when a permission to use the shared memory 43 is given to a remote node, the application recognizing unit 71 of the home node records the node number of the remote node that uses the shared memory segment in the management table 70. There may be more than one remote node that uses the shared memory 43 because the memory can be shared, and thus the application recognizing unit 71 records all the node numbers each time permission to use the shared memory 43 is given.

When the shared memory 43 is assigned to applications, the application recognizing unit 71 of each node 1 records the process IDs (PIDs) of the applications that use the shared memory in the management table 70. There may be more than one application that uses the shared memory 43 and thus the application recognizing unit 71 records all the PIDs each time the shared memory 43 is assigned to applications.

When a remote node informs the application recognizing unit 71 that the use of the shared memory 43 ends or when a remote node stops, the application recognizing unit 71 of the home node deletes the record of the node number of the remote node from the management table 70. When an application informs the application recognizing unit 71 that the use of the shared memory ends or when an application ends, the application recognizing unit 71 of each node 1 deletes the record of the process ID of the application from the management table 70.

Upon being informed of the information on a failed segment (address, size, segment number, etc.) by the shared memory determining unit 52, the failed-area recognizing unit 72 recognizes the failure of the failed segment. The failed-area recognizing unit 72 acquires, as a replacement segment, a physically different normal segment that has the same size as that of the failed segment.

The access stopping unit 73 gives not only the home node but also multiple remote nodes information on the segment including the failed area and stops access per segment. Specifically, the access stopping unit 73 of the home node gives the information on the failed segment (address, size, segment number, etc.) and information on the replacement segment (address, size, segment number, etc.) to the access stopping units 73 of all nodes 1 that are using the failed segment.

With reference to the management tables 70 that are prepared for the respective segments, the access stopping unit 73 of each node identifies the applications that are using the failed segment. The access stopping unit 73 of each node then gives all applications that are using the failed segment information on the failed segment (address, size, segment number, etc.) and instructs the applications to temporarily stop accessing the failed segment.

The applications that are using the shared memory where an error has occurred then temporarily stops accessing the failed segment. However, the applications only stop accessing the failed segment in the shared memory, and the applications can still access other segments in the shared memory and the local memory and thus the applications do not need to completely stop their operations.

The applications that are using the shared memory where an error has occurred inform the access stopping unit 73 of each node 1 that the applications stop accessing the failed segment. The access stopping unit 73 of each node 1 then informs the access stopping unit 73 of the home node of the completion of the process for stopping access to the failed segment.

After the completion of the process performed by the access stopping unit 73, the access blocking unit 74 cancels the setting of the memory token for the failed segment for the home node and of the access tokens for the failed segment for the remote nodes in order to stop an access to the failed segment in hardware. The access blocking unit 74 completely blocks all accesses in hardware in order to completely ensure that no data corruption can occur.

The access blocking unit 74 of each node 1 copies, to the management information on the replacement segment, the management information (segment size, use permitted node number, PID of the application in use, memory token, and use prohibition flag) other than the address of the failed segment in the management table 70.

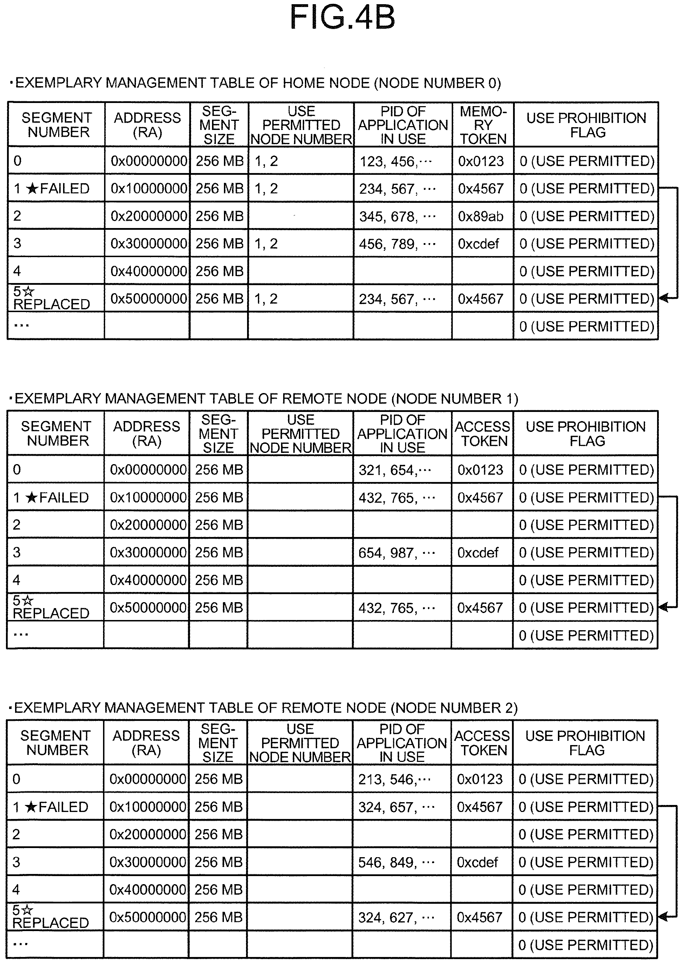

FIG. 4B is a diagram indicating management tables 70 where the management information on a failed segment has been copied to management information on a replacement segment and the diagram thus indicates management tables 70 different from their state in FIG. 4A. FIG. 4B represents, in the home node and the two remote nodes, the management information other than address with the segment number "1" indicating the failed segment is copied to the management information with the segment number "5" indicating the replacement segment.

The access blocking unit 74 of each node 1 cancels the setting of the memory token or the access tokens for the failed segment. The shared memory managing unit 62 can completely block access to the failed segment from any remote node.

After the access blocking unit 74 blocks an access in hardware, the replacing unit 75 copies the data on the failed segment to the replacement segment. The replacing unit 75 then rewrites the mapping table 63 that stores VA-RA mapping information such that the virtual addresses VA of the failed segment (from which data is copied) and the replacement segment that is newly acquired (to which data is copied) match.

Specifically, the replacing unit 75 of the home node copies the data on the failed segment to the data on the replacement segment. The replacing unit 75 of the home node frees the physical memory of the failed segment. The replacing unit 75 of each node 1 changes the use prohibition flag corresponding to the failed segment in the segment management table 70 from "0" to "1" so that a use prohibition mark is added not to use the failed segment in subsequent processes.

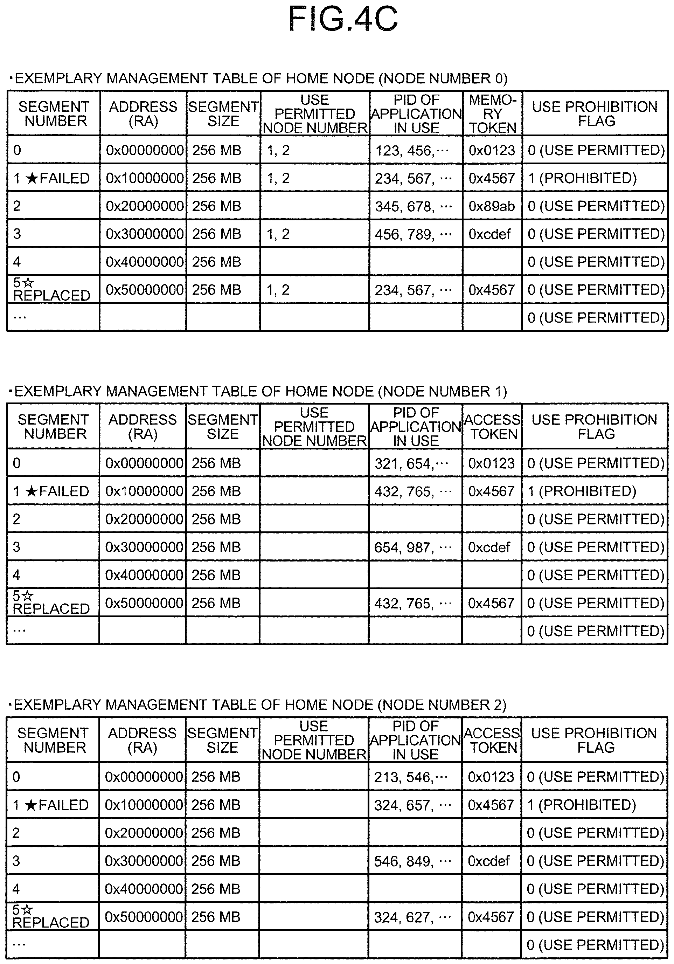

FIG. 4C is a diagram indicating management tables 70 where the use prohibition flag of the failed segment has been changed and the diagram thus indicates management tables different from the state in FIG. 4B. As represented in FIG. 4C, in the home node and the two remote nodes, the use prohibition flag of the segment number "1" indicating the failed segment has been changed from "0" to "1".

The replacing unit 75 of each node 1 rewrites the VA-RA mapping information to replace the RA corresponding to the virtual address (VA) of the area where an error has occurred with the RA of the replacement segment. Here, the replacing unit 75 of each node 1 rewrites the VA-RA mapping information. Alternatively, the hypervisor of each node 1 may rewrite the RA-PA mapping information.

The replacing unit 75 of the home node sets a memory token such that the memory token for the replacement segment is the same as that of the memory token for the failed segment.

After the replacing unit 75 resets the memory token, the access restarting unit 76 instructs not only the home node but also the multiple remote nodes to restart accessing the memory per segment. Specifically, the access restarting unit 76 of the home node informs the access restarting units 76 of all nodes 1 of the restart of access to the target segment. The access restarting unit 76 of each node 1 then instructs all applications that used the failed segment to restart accessing the target segment.

When the applications then access the virtual address (VA) of the area where an error has occurred, the applications accordingly access the physical memory of the replacement segment that is newly acquired.

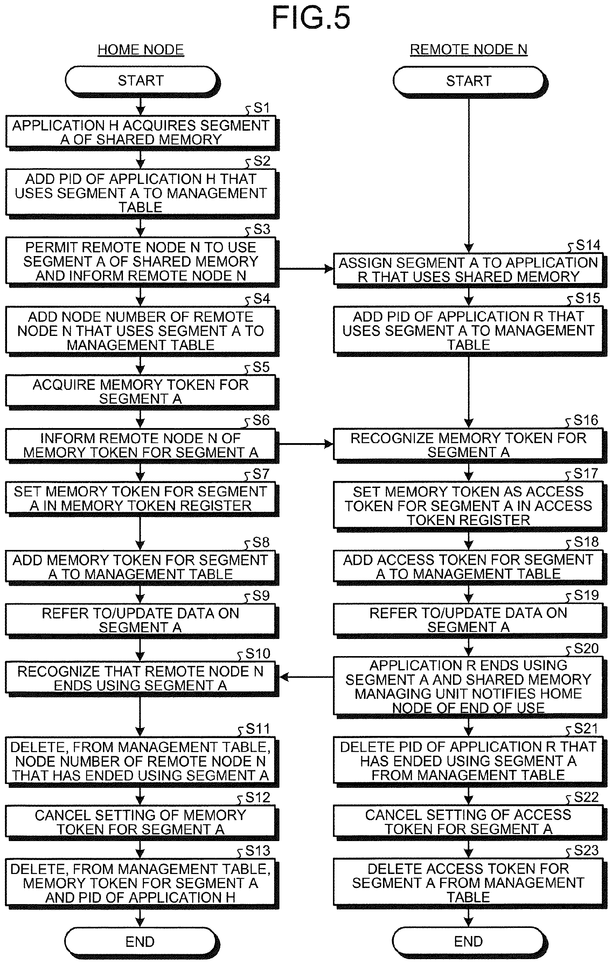

A flow of the process for recognizing applications that use the shared memory 43 per segment will be described here. FIG. 5 is a flowchart of the process for recognizing applications that use the shared memory 43 per segment. In the following descriptions, Segment A denotes a failed segment and Segment B denotes a replacement segment. Application H denotes an application that uses Segment A in a home node, Application R denotes an application that uses Segment A in a remote node, and Remote node N denotes a node 1 that uses Segment A.

As represented in FIG. 5, Application H of the home node acquires Segment A of the shared memory 43 (step S1). The application recognizing unit 71 of the home node adds a PID of Application H that uses Segment A to the management table 70 (step S2).

The shared memory managing unit 62 of the home node then permits Remote node N to use Segment A of the shared memory 43 and informs Remote node N of the permission to use Segment A (step S3). The application recognizing unit 71 of the home node adds the node number of Remote node N that uses Segment A to the management table 70 (step S4).

On the other hand, once being informed of the permission to use Segment A, the shared memory managing unit 62 of Remote node N assigns Segment A to Application R that uses the shared memory 43 (step S14). The application recognizing unit 71 of Remote node N adds a PID of Application R that uses Segment A to the management table 70 (step S15).

The shared memory managing unit 62 of the home node then acquires a memory token for Segment A (step S5) and informs Remote node N of the memory token for Segment A (step S6). The shared memory managing unit 62 of the home node sets the memory token for Segment A in the memory token register 27 (step S7) and adds the memory token for Segment A to the management table 70 (step S8).

On the other hand, once being informed of the memory token for Segment A by the home node, the shared memory managing unit 62 of Remote node N recognizes the memory token for Segment A (step S16). The shared memory managing unit 62 of Remote node N sets the memory token as an access token for Segment A in the access token register 28 (step S17) and adds the access token for Segment A to the management table 70 (step S18).

Application H of the home node then refers to or updates the data on Segment A (step S9). Application R of Remote node N also refers to or updates the data on Segment A (step S19).

Application R of Remote node N then ends using Segment A and the shared memory managing unit 62 of Remote node N informs the home node of the end of use of Segment A (step S20). The shared memory managing unit 62 of the home node recognizes that Remote node N ends using Segment A (step S10). The application recognizing unit 71 of the home node then deletes the node number of the remote node that has ended using Segment A from the management table 70 (step S11).

Application H of the home node then ends using Segment A. The shared memory managing unit 62 of the home node then cancels the setting of the memory token for Segment A (step S12) and the application recognizing unit 71 of the home node then deletes the memory token for Segment A and the PID of Application H from the management table 70 (step S13).

On the other hand, once the shared memory managing unit 62 of Remote node N informs the home node of the end of the use of Segment A, the application recognizing unit 71 of Remote node N deletes the PID of Application R that has ended using Segment A from the management table 70 (Step S21). The shared memory managing unit 62 of Remote node N cancels the setting of the access token for Segment A (step S22) and deletes the access token for Segment A from the management table 70 (step S23).

In this manner, the application recognizing unit 71 of the home node and the application recognizing unit 71 of Remote node N associate to recognize the node number of the node that uses Segment A and the PID of the process that uses Segment A. Accordingly, when a failure occurs in Segment A, the shared memory managing unit 62 of the home node can request the remote node that uses Segment A to stop using Segment A.

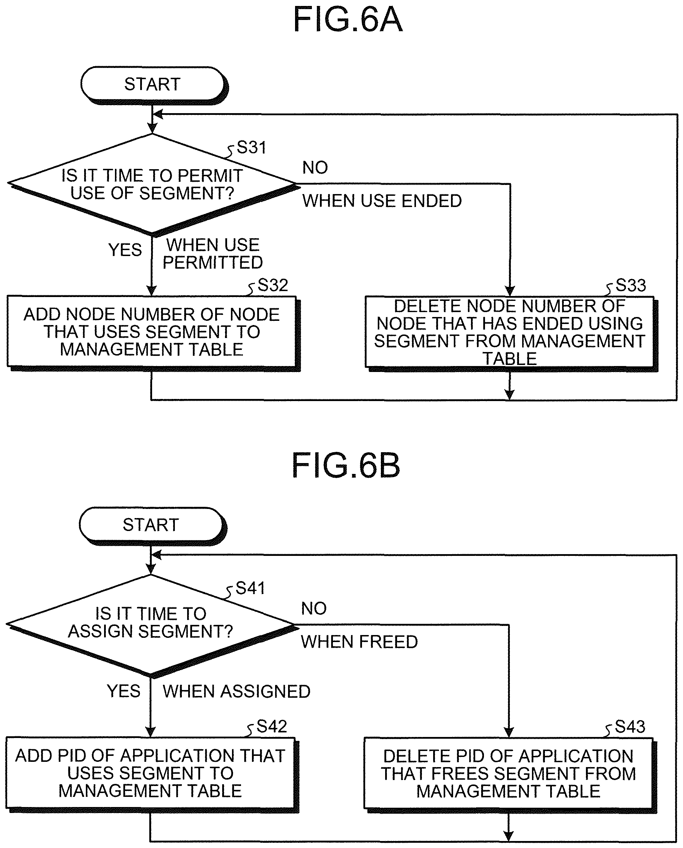

The flow of the process that recognizes a node 1 that uses the shared memory 43 per segment will be described here. FIG. 6A is a flowchart of a process for recognizing a node 1 that uses the shared memory 43 per segment. The process indicated in FIG. 6A corresponds to the processes at step S4 and at step S11 represented in FIG. 5.

As represented in FIG. 6A, the application recognizing unit 71 of the home node determines whether it is time to permit a remote node to use a segment of the shared memory 43 (step S31). When it is time to permit the remote node to use the segment of the shared memory 43, the application recognizing unit 71 of the home node adds the node number of the node 1 that uses the segment to the management table 70 (step S32).

In contrast, when it is not time to permit the remote node to use the segment of the shared memory 43, i.e., when the use of the segment ends, the application recognizing unit 71 of the home node deletes the node number of the node 1 that ends using the segment from the management table 70 (step S33).

As described above, by managing the node number of the node 1 that uses the segment with the management table 70, the application recognizing unit 71 of the home node can recognizes the remote node that uses the segment.

A flow of the process for recognizing an application that uses the shared memory 43 per segment will be described here. FIG. 6B is a flowchart of the process for recognizing an application that uses the shared memory 43 per segment. The process represented in FIG. 6B corresponds to the processes at step S15 and step S21 represented in FIG. 5.

As represented in FIG. 6B, the application recognizing unit 71 of a remote node determines whether it is time to assign a segment (step S41). When it is time to assign a segment, the application recognizing unit 71 of the remote node adds the PID of the application that uses the segment to the management table 70 (step S42).

In contrast, when it is not time to assign a segment, i.e., when the segment is freed, the application recognizing unit 71 of the remote node deletes the PID of the application that frees the segment from the management table 70 (step S43).

As described above, by managing the PID of the application that uses the segment with the management table 70, the application recognizing unit 71 of the remote node can recognize the application that uses the segment.

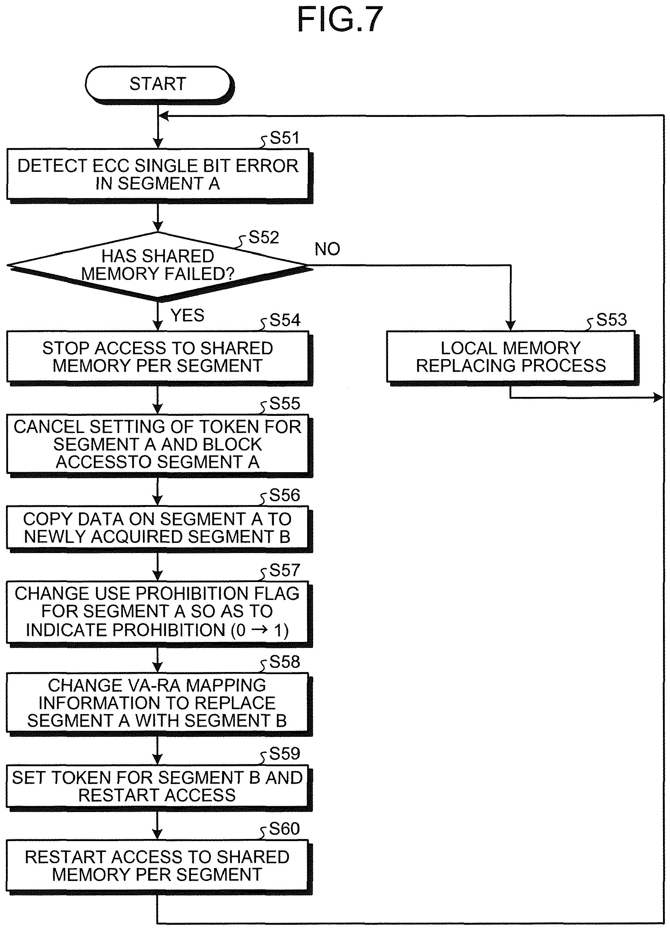

The flow of the process performed when an error has occurred in Segment A of the shared memory 43 will be described here. FIG. 7 is a flowchart of a process performed when an error has occurred in Segment A of the shared memory 43.

As illustrated in FIG. 7, once the memory error detecting unit 51 of the hypervisor 50 of the home node detects an ECC single bit error of Segment A (step S51), the shared memory determining unit 52 determines whether the shared memory 43 has failed (step S52). When the shared memory 43 has not failed, the local memory replacing unit 61 of the OS 60 performs a local memory replacing process or a local memory separation process (step S53).

In contrast, when the shared memory 43 has failed, the access stopping unit 73 of the shared memory managing unit 62 stops access to the shared memory 43 per segment (step S54). The access blocking unit 74 then cancels setting of the token for Segment A and blocks access to Segment A (step S55). Canceling setting of the token for Segment A means that the access blocking unit 74 of the home node cancels setting of the memory token and the access blocking unit 74 of the remote node cancels setting of the access token.

The replacing unit 75 copies the data on Segment A to newly acquired Segment B (step S56) and changes the use prohibition flag for Segment A so as to indicate that the use of the segment is prohibited (step S57). The replacing unit 75 replaces segment A with Segment B by changing the VA-RA mapping information (step S58) and sets a token for Segment B to restart accesses (step S59). Setting a token for Segment B means that the replacing unit 75 of the home node sets a memory token and the replacing unit 75 of the remote node sets an access token.

The access restarting unit 76 then restarts access to the shared memory 43 per segment (step S60).

In this manner, the access stopping unit 73 stops access to the failed Segment A, the access blocking unit 74 blocks access to the failed Segment A, and the replacing unit 75 replaces the failed Segment A with replacement Segment B. Accordingly, the shared memory managing unit 62 can reduce effects, which are caused when a failure occurs in the shared memory 43, on the information processing system 2, which allows the information processing system 2 to continue its operation.

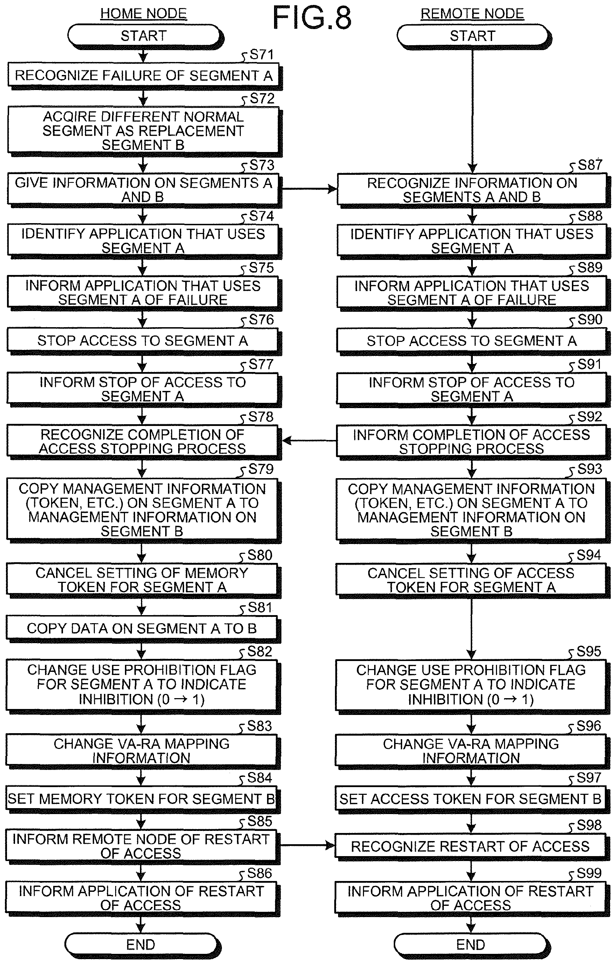

The flow of the replacing process performed for the shared memory accessed by nodes will be described in detail below. FIG. 8 is a flowchart of the replacing process performed for the shared memory 43. The processes at step S73 and the subsequent steps in FIG. 8 are detailed processes from steps S54 to S60 represented in FIG. 7 and are separated into the process performed by the home node and the process performed by the remote nodes.

As represented in FIG. 8, the failed-area recognizing unit 72 of the home node recognizes a failure in Segment A of the shared memory 43 (step S71) and acquires a different normal segment as replacement Segment B (step S72).

The access stopping unit 73 of the home node gives all remote nodes that use Segment A information on Segments A and B (step S73). The access stopping unit 73 of the home node then identifies an application that uses Segment A by using the management table 70 (step S74) and informs the application that uses Segment A of the failure (step S75).

The application that uses Segment A in the home node then stops accessing Segment A (step S76) and the OS 60 of the home node informs the access stopping unit 73 of the home node of the stop of access to Segment A (step S77).

On the other hand, the access stopping units 73 of the remote node that has received the information on Segments A and B from the home node recognizes the information on Segments A and B (step S87). By using the management table 70, the access stopping unit 73 of the remote node identifies an application that uses Segment A (step S88) and informs the application that uses Segment A of the failure (step S89).

The application that uses Segment A in the remote node then stops accessing Segment A (step S90) and informs the access stopping unit 73 of the remote node of the stop of access to Segment A (step S91). The access stopping unit 73 of the remote node then informs the access stopping unit 73 of the home node of completion of the access stopping process (step S92).

Once being informed of the completion of the access stopping process by all remote nodes that use Segment A, the access stopping unit 73 of the home node recognizes the completion of the access stopping process (step S78). The access blocking unit 74 of the home node then copies the management information on Segment A to the management information on Segment B (step S79) and cancels setting of the memory token for Segment A (Step S80).

On the other hand, the access blocking unit 74 of the remote node copies the management information on Segment A to the management information on Segment B (step S93) and cancels setting of the access token for Segment A (step S94).

The replacing unit 75 of the home node then copies the data of Segment A to the data on Segment B (step S81) and changes the use prohibition flag so as to indicate that the use of the segment is prohibited (step S82). The replacing unit 75 of the home node then changes the VA-RA mapping information (step S83) and sets a memory token for Segment B (step S84).

On the other hand, the replacing unit 75 of the remote node changes the use prohibition flag for Segment A so as to indicate that the use of the segment is prohibited (step S95) and then changes the VA-RA mapping information (step S96). The replacing unit 75 of the remote node then sets an access token for Segment B (step S97).

The access restarting unit 76 of the home node then informs all remote nodes that use Segment B of the restart of access (step S85) and informs the application of the restart of access (step S86).

Upon being informed by the home node of the restart of access to Segment B, the access restarting unit 76 of the remote node recognizes the restart of access (step S98) and informs the application of the restart of access (step S99).

As described above, in the embodiment, the access blocking unit 74 blocks an access to the failed segment by using the token in hardware and the replacing unit 75 performs a process for replacing the failed segment with the replacement segment. Accordingly, the shared memory managing unit 62 can prevent occurrence of a problem in that written data is not written to the shared memory 43 by the automatic replacing function, which allows the information processing system 2 to continue its operation.

In the embodiment, the management table 70 of the home node stores node numbers of nodes 1 that are permitted to access the shared memory 43 per segment and the management table 70 of each node 1 stores PIDs of applications that use the shared memory 43 per segment. For each segment of the shared memory 43, the application recognizing unit 71 recognizes the node numbers of nodes 1 that are given access permission and PIDs of applications and records them in the management table 70. When a failure occurs in the shared memory 43, the access stopping unit 73 identifies applications that use the failed segment including applications of different nodes 1 and informs the applications of stop of the use of the failed segment. Accordingly, the shared memory managing unit 62 can prevent the applications from accessing the failed segment.

Furthermore, in the embodiment, once the replacing a failed segment with a replacement segment completes, the access restarting unit 76 informs applications that were using the failed segment, including applications of different nodes 1, of the restart of access. Accordingly, the applications that were using the failed segment can continuously perform processing.

Furthermore, the embodiment has been described above using an exemplary case where an access to a failed segment is blocked by using memory tokens in hardware, but the present invention is not limited to this and the embodiment may be similarly applied to a case where an access to a failed segment is blocked in software.

## Claims

1. An information processing device (1) configured to configure an information processing system (2) together with a different information processing device (1) and that includes a shared memory (43) configured to be accessed by the different information processing device (1), the information processing device (1) comprising:
a blocking unit (74) configured, when an access failure is detected in a first area of the shared memory (43), to block access in hardware to the first area by canceling setting of a memory token that is used to control permission for the different information processing device (1) to access the first area; and
a replacing unit (75) configured to replace the first area for which access is blocked by the blocking unit (74) with a normal second area and control permission to access the second area according to the permission control information.

2. The information processing device (1) according to claim 1, further comprising:
a recognizing unit (71) configured to recognize the different information processing device (1) that is permitted to access each area of the shared memory (43);
a stop informing unit (73) configured , when an access failure is detected in the first area, inform the different information processing device (1), which is recognized by the recognizing unit (71) regarding the permission to access the first area, to stop of access to the first area; and
a restart informing unit (76) configured , when the replacing unit (75) replaces the first area with the second area, to inform the different information processing device (1), which is informed of stop of access to the first area by the stop informing unit (73),to restart of access.

3. The information processing device (1) according to claim 2,
wherein
the recognizing unit (71) is configured to recognize an application that is permitted to access each area of the shared memory (43),
the stop informing unit (73) is configured to inform the application, which is recognized by the recognizing unit (71) regarding the permission to access the first area, stop of access to the first area, and
the restart informing unit (76) is configured to inform the application, which is informed of stop of access by the stop informing unit (73), of restart of access.

4. The information processing device (1) according to claim 2, further comprising a management information storage unit (70) configured to store, in association with each area of the shared memory (43), management information that includes the permission control information and identification information that identifies the different information processing device (1) permitted to access each area, wherein
the recognizing unit (71) is configured to write, to the management information storage unit (70), information that identifies the different information device (1) that is recognized regarding access permission,
the stop informing unit (73) is configured to inform stop of access to the first area on the basis of the management information stored in the management information storage unit (70), and
the replacing unit (75) is configured to copy the management information that is stored regarding the first area by the management information storage unit (70) to the management information that is stored regarding the second area.

5. The information processing device (1) according to claim 1,
wherein
a memory token is stored in a register (27) that is associated with each area, and
the replacing unit (75) is configured to set a memory token that is stored in a register (27) associated with the first area in a register (27) that is associated with the second area.

6. The information processing device (1) according to claim 1, wherein the replacing unit (75) is configured to replace the first area with the second area by rewriting a mapping table (63) for converting a virtual address to a real address or a physical address.

7. A shared memory management method performed by an information processing device that configures an information processing system together with a different information processing device and that includes a shared memory that is accessed by the different information processing device, the shared memory management method comprising:
when an access failure is detected in a first area of the shared memory, blocking access in hardware to the first area by canceling setting of a memory token that is used to control permission for the different information processing device to access the first area; and
replacing the first area for which access is blocked at the blocking with a normal second area and controlling permission to access the second area according to the permission control information.

8. A computer-readable storing medium that stores a shared memory management program that is executed by an information processing device that configures an information processing system together with a different information processing device and that includes a shared memory that is accessed by the different information processing device, the shared memory management program causing the information processing device to execute a process comprising:
when an access failure is detected in a first area of the shared memory, blocking access in hardware to the first area by canceling setting of a memory token that is used to control permission for the different information processing device to access the first area; and
replacing the first area for which access is blocked at the blocking with a normal second area and controlling permission to access the second area according to the permission control information.

## Patentansprüche

1. Informationsverarbeitungsvorrichtung (1), die dafür konfiguriert ist, ein Informationsverarbeitungssystem (2) zusammen mit einer anderen Informationsverarbeitungsvorrichtung (1) zu konfigurieren und die einen gemeinsam genutzten Speicher (43) aufweist, der dafür konfiguriert ist, dass die andere Informationsverarbeitungsvorrichtung (1) auf ihn zugreift, wobei die Informationsverarbeitungsvorrichtung (1) umfasst:
eine Blockiereinheit (74), die dafür konfiguriert ist, wenn ein Zugriffsfehler in einem ersten Bereich des gemeinsam genutzten Speichers (43) erkannt wird, einen Zugriff in Hardware auf den ersten Bereich durch Abbrechen eines Festlegens eines Speichertokens zu blockieren, der verwendet wird, um eine Erlaubnis für die andere Informationsverarbeitungsvorrichtung (1) zum Zugriff auf den ersten Bereich zu steuern, und
eine Ersetzungseinheit (75), die dafür konfiguriert ist, den ersten Bereich, auf den ein Zugriff durch die Blockiereinheit (74) blockiert wird, durch einen normalen zweiten Bereich zu ersetzen und eine Erlaubnis zum Zugriff auf den zweiten Bereich gemäß den Erlaubnissteuerungsinformationen zu steuern.

2. Informationsverarbeitungsvorrichtung (1) nach Anspruch 1, die ferner umfasst:
eine Erkennungseinheit (71), die dafür konfiguriert ist, die andere Informationsverarbeitungsvorrichtung (1) zu erkennen, der erlaubt ist, auf jeden Bereich des gemeinsam genutzten Speichers (43) zuzugreifen;
eine Beendigungs-Informationseinheit (73), die dafür konfiguriert ist, wenn ein Zugriffsfehler in dem ersten Bereich erkannt wird, die von der Erkennungseinheit (71) in Bezug auf die Erlaubnis zum Zugriff auf den ersten Bereich erkannte andere Informationsverarbeitungsvorrichtung (1) zu informieren, um einen Zugriff auf den ersten Bereich zu beenden, und
eine Neubeginn-Informationseinheit (76), die dafür konfiguriert ist, wenn die Ersetzungseinheit (75) den ersten Bereich durch den zweiten Bereich ersetzt, die andere Informationsverarbeitungsvorrichtung (1), die über eine Beendigung eines Zugriffs auf den ersten Bereich mithilfe der Beendigungs-Informationseinheit (73) informiert wurde, über einen Neubeginn einer Zugriffsmöglichkeit zu informieren.

3. Informationsverarbeitungsvorrichtung (1) nach Anspruch 2, wobei:
die Erkennungseinheit (71) dafür konfiguriert ist, eine Anwendung zu erkennen, der erlaubt ist, auf jeden Bereich des gemeinsam genutzten Speichers (43) zuzugreifen,
die Beendigungs-Informationseinheit (73) dafür konfiguriert ist, die von der Erkennungseinheit (71) in Bezug auf die Erlaubnis zum Zugriff auf den ersten Bereich erkannte Anwendung über eine Beendigung eines Zugriffs auf den ersten Bereich zu informieren, und
die Neubeginn-Informationseinheit (76) dafür konfiguriert ist, die Anwendung, die über eine Beendigung eines Zugriffs mithilfe der Beendigungs-Informationseinheit (73) informiert wurde, über einen Neubeginn einer Zugriffsmöglichkeit zu informieren.

4. Informationsverarbeitungsvorrichtung (1) nach Anspruch 2, die ferner eine Verwaltungsinformations-Speichereinheit (70) umfasst, die dafür konfiguriert ist, in Verbindung mit jedem Bereich des gemeinsam genutzten Speichers (43) Verwaltungsinformationen zu speichern, die die Erlaubnissteuerungsinformationen sowie Identifizierungsinformationen beinhalten, durch die die andere Informationsverarbeitungsvorrichtung (1) identifiziert wird, der erlaubt ist, auf jeden Bereich zuzugreifen, wobei
die Erkennungseinheit (71) dafür konfiguriert ist, in die Verwaltungsinformations-Speichereinheit (70) Informationen zu schreiben, durch die die andere Informationsverarbeitungsvorrichtung (1) identifiziert wird, die in Bezug auf eine Zugriffserlaubnis erkannt wird,
die Beendigungs-Informationseinheit (73) dafür konfiguriert ist, über eine Beendigung eines Zugriffs auf den ersten Bereich auf der Grundlage der Verwaltungsinformationen zu informieren, die in der Verwaltungsinformations-Speichereinheit (70) gespeichert sind, und
die Ersetzungseinheit (75) dafür konfiguriert ist, die Verwaltungsinformationen, die bezüglich des ersten Bereichs von der Verwaltungsinformations-Speichereinheit (70) gespeichert werden, in die bezüglich des zweiten Bereichs gespeicherten Verwaltungsinformationen zu kopieren.

5. Informationsverarbeitungsvorrichtung (1) nach Anspruch 1, wobei:
ein Speichertoken in einem Register (27) gespeichert ist, das jedem Bereich zugeordnet ist, und
die Ersetzungseinheit (75) dafür konfiguriert ist, einen Speichertoken, der in einem Register (27) gespeichert ist, das dem ersten Bereich zugeordnet ist, in einem Register (27) festzulegen, das dem zweiten Bereich zugeordnet ist.

6. Informationsverarbeitungsvorrichtung (1) nach Anspruch 1, wobei die Ersetzungseinheit (75) dafür konfiguriert ist, durch Neuschreiben einer Zuordnungstabelle (63) zum Umwandeln einer virtuellen Adresse in eine reale Adresse oder eine physische Adresse den ersten Bereich durch den zweiten Bereich zu ersetzen.

7. Verwaltungsverfahren für gemeinsam genutzten Speicher, durchgeführt mithilfe einer Informationsverarbeitungsvorrichtung, die ein Informationsverarbeitungssystem zusammen mit einer anderen Informationsverarbeitungsvorrichtung konfiguriert und die einen gemeinsam genutzten Speicher aufweist, auf den die andere Informationsverarbeitungsvorrichtung zugreift, wobei das Verwaltungsverfahren für gemeinsam genutzten Speicher umfasst:
Wenn ein Zugriffsfehler in einem ersten Bereich des gemeinsam genutzten Speichers erkannt wird, Blockieren eines Zugriffs in Hardware auf den ersten Bereich durch Abbrechen eines Festlegens eines Speichertokens, der verwendet wird, um eine Erlaubnis für die andere Informationsverarbeitungsvorrichtung zum Zugriff auf den ersten Bereich zu steuern, und
Ersetzen des ersten Bereichs, auf den bei dem Blockieren ein Zugriff blockiert wird, durch einen normalen zweiten Bereich und Steuern einer Erlaubnis zum Zugriff auf den zweiten Bereich gemäß den Erlaubnissteuerungsinformationen.

8. Computerlesbares Speichermedium, auf dem ein Verwaltungsprogramm für gemeinsam genutzten Speicher gespeichert ist, das von einer Informationsverarbeitungsvorrichtung ausgeführt wird, die ein Informationsverarbeitungssystem zusammen mit einer anderen Informationsverarbeitungsvorrichtung konfiguriert und die einen gemeinsam genutzten Speicher aufweist, auf den die andere Informationsverarbeitungsvorrichtung zugreift, wobei das Verwaltungsprogramm für gemeinsam genutzten Speicher die Informationsverarbeitungsvorrichtung zum Ausführen eines Prozesses veranlasst, der umfasst:
Wenn ein Zugriffsfehler in einem ersten Bereich des gemeinsam genutzten Speichers erkannt wird, Blockieren eines Zugriffs in Hardware auf den ersten Bereich durch Abbrechen eines Festlegens eines Speichertokens, der verwendet wird, um eine Erlaubnis für die andere Informationsverarbeitungsvorrichtung zum Zugriff auf den ersten Bereich zu steuern, und
Ersetzen des ersten Bereichs, auf den bei dem Blockieren ein Zugriff blockiert wird, durch einen normalen zweiten Bereich und Steuern einer Erlaubnis zum Zugriff auf den zweiten Bereich gemäß den Erlaubnissteuerungsinformationen.

## Revendications

1. Dispositif de traitement d'informations (1) configuré de manière à configurer un système de traitement d'informations (2) conjointement avec un dispositif de traitement d'informations distinct (1) et qui inclut une mémoire partagée (43) configurée de manière à être accessible par le dispositif de traitement d'informations distinct (1), le dispositif de traitement d'informations (1) comprenant :
une unité de blocage (74) configurée, lorsqu'un échec d'accès est détecté dans une première zone de la mémoire partagée (43), de manière à bloquer un accès au niveau matériel à la première zone, en annulant une définition d'un jeton de mémoire qui est utilisé pour commander l'autorisation donnée au dispositif de traitement d'informations distinct (1) d'accéder à la première zone ; et
une unité de remplacement (75) configurée de manière à remplacer la première zone, pour laquelle l'accès est bloqué par l'unité de blocage (74), par une seconde zone normale, et à commander l'autorisation d'accéder à la seconde zone selon les informations de commande d'autorisation.

2. Dispositif de traitement d'informations (1) selon la revendication 1, comprenant en outre :
une unité de reconnaissance (71) configurée de manière à reconnaître le dispositif de traitement d'informations distinct (1) qui est autorisé à accéder à chaque zone de la mémoire partagée (43) ;
une unité de signalement d'interruption (73) configurée, lorsqu'un échec d'accès est détecté dans la première zone, de manière à signaler au dispositif de traitement d'informations distinct (1), lequel est reconnu par l'unité de reconnaissance (71) en ce qui concerne l'autorisation d'accéder à la première zone, d'interrompre l'accès à la première zone ; et
une unité de signalement de redémarrage (76) configurée, lorsque l'unité de remplacement (75) remplace la première zone par la seconde zone, de manière à signaler au dispositif de traitement d'informations distinct (1), lequel est informé en ce qui concerne l'interruption d'accès à la première zone par l'unité de signalement d'interruption (73), de redémarrer l'accès.

3. Dispositif de traitement d'informations (1) selon la revendication 2, dans lequel :
l'unité de reconnaissance (71) est configurée de manière à reconnaître une application qui est autorisée à accéder à chaque zone de la mémoire partagée (43) ;
l'unité de signalement d'interruption (73) est configurée de manière à signaler à l'application, qui est reconnue par l'unité de reconnaissance (71) en ce qui concerne l'autorisation d'accéder à la première zone, d'interrompre l'accès à la première zone ; et
l'unité de signalement de redémarrage (76) est configurée de manière à signaler à l'application, qui est informée de l'interruption d'accès par l'unité de signalement d'interruption (73), de redémarrer l'accès.

4. Dispositif de traitement d'informations (1) selon la revendication 2, comprenant en outre une unité de stockage d'informations de gestion (70) configurée de manière à stocker, en association avec chaque zone de la mémoire partagée (43), des informations de gestion qui incluent les informations de commande d'autorisation, et des informations d'identification qui identifient le dispositif de traitement d'informations distinct (1) autorisé à accéder à chaque zone, dans lequel :
l'unité de reconnaissance (71) est configurée de manière à écrire, dans l'unité de stockage d'informations de gestion (70), des informations qui identifient le dispositif de traitement d'informations distinct (1) qui est reconnu en ce qui concerne l'autorisation d'accès ;
l'unité de signalement d'interruption (73) est configurée de manière à signaler l'interruption d'accès à la première zone, sur la base des informations de gestion stockées dans l'unité de stockage d'informations de gestion (70) ; et
l'unité de remplacement (75) est configurée de manière à copier les informations de gestion qui sont stockées en ce qui concerne la première zone par l'unité de stockage d'informations de gestion (70) dans les informations de gestion qui sont stockées en ce qui concerne la seconde zone.

5. Dispositif de traitement d'informations (1) selon la revendication 1, dans lequel :
un jeton de mémoire est stocké dans un registre (27) qui est associé à chaque zone ; et
l'unité de remplacement (75) est configurée de manière à définir un jeton de mémoire qui est stocké dans un registre (27) associé à la première zone, dans un registre (27) qui est associé à la seconde zone.

6. Dispositif de traitement d'informations (1) selon la revendication 1, dans lequel l'unité de remplacement (75) est configurée de manière à remplacer la première zone par la seconde zone, en réécrivant une table de mise en correspondance (63) pour convertir une adresse virtuelle en une adresse réelle ou en une adresse physique.

7. Procédé de gestion de mémoire partagée mis en oeuvre par un dispositif de traitement d'informations qui configure un système de traitement d'informations conjointement avec un dispositif de traitement d'informations distinct et qui inclut une mémoire partagée qui est accessible par le dispositif de traitement d'informations distinct, le procédé de gestion de mémoire partagée comprenant les étapes ci-dessous consistant à :
lorsqu'un échec d'accès est détecté dans une première zone de la mémoire partagée, bloquer un accès au niveau matériel à la première zone, en annulant une définition d'un jeton de mémoire qui est utilisé pour commander l'autorisation donnée au dispositif de traitement d'informations distinct d'accéder à la première zone ; et
remplacer la première zone, pour laquelle l'accès est bloqué au cours de l'étape de blocage, par une seconde zone normale, et commander l'autorisation d'accéder à la seconde zone selon les informations de commande d'autorisation.

8. Support de stockage lisible par ordinateur lequel stocke un programme de gestion de mémoire partagée qui est exécuté par un dispositif de traitement d'informations qui configure un système de traitement d'informations conjointement avec un dispositif de traitement d'informations distinct et qui inclut une mémoire partagée qui est accessible par le dispositif de traitement d'informations distinct, le programme de gestion de mémoire partagée amenant le dispositif de traitement d'informations à exécuter un processus comprenant les étapes ci-dessous consistant à :
lorsqu'un échec d'accès est détecté dans une première zone de la mémoire partagée, bloquer un accès au niveau matériel à la première zone, en annulant une définition d'un jeton de mémoire qui est utilisé pour commander l'autorisation donnée au dispositif de traitement d'informations distinct d'accéder à la première zone ; et
remplacer la première zone, pour laquelle l'accès est bloqué au cours de l'étape de blocage, par une seconde zone normale, et commander l'autorisation d'accéder à la seconde zone selon les informations de commande d'autorisation.
